# EUROPEAN PATENT SPECIFICATION

(11) **EP 2 366 920 B1**
(45) Date of publication and mention of the grant of the patent: **21.11.2012**
(21) Application number: 10425057.6
(22) Date of filing: 05.03.2010
(51) Int. Cl.: F16K 3/02

(54) **Sealing system for industrial gate valves and gate valve comprising such a system**
Dichtungssystem für industrielle Schieberventile und Schieberventil mit solch einem System
Système d'étanchéité de robinets-vannes industriels et robinets-vannes le comprenant

(43) Date of publication of application: 21.09.2011
(73) Proprietor: Gasket International S.p.A., 24060 Cividino di Castelli, Calepio (IT)
(72) Inventor: Scattini, Roberto, 24060 Credaro (IT)
(74) Representative: Borsano, Corrado

(56) References cited:
- WO-A2-2006/130546
- US-A- 3 765 647
- US-A- 5 163 655
- US-A1- 2007 228 316

## Description

The present invention concerns a sealing system particularly for industrial safety valves, even more particularly for industrial gate valves.

Document US 3, 765, 647 discloses a sealing system according to the preamble of claim 1.

Safety valves, in particular gate valves, are complex systems comprising a plurality of components and are generally operable by means of a mechanical actuator.

Moreover, they generally comprise at least one main body, at least one seat or sealing seat, and at least one slab.

In certain types of gate valves known from the state of the art, the seat sealing on the slab is obtained by means of a metal-to-metal contact.

Nevertheless, this type of seal is not free from contraindications, mainly due to the metal-to-metal contact between the seat and the slab being able to cause the definitive seizing of the valve, often with irreparable damage, and this is due both to the high pressures that are discharged from the seat onto the slab, and due to the possible infiltration of debris or in any case dirt between the seat and the slab. In order to partially discharge the pressure which is exerted between the seat and the slab and in order to avoid the metal-to-metal seal which may lead to the valve seizing, as mentioned, gate valves are known on the market in which a member made of thermoplastic material works between the seat and the slab, which is suited to ensure the sealing of the valve while being suited to allow the relative movement between seat and slab, required to achieve the opening and closing of the valve itself.

As known from the state of the art, said sealing member generally consists of an insert made of thermoplastic material assembled to the metal part called sealing seat and suited to hermetically close the valve body and the slab, as mentioned. Although this type of gate valves provided with an insert made of thermoplastic material associated with the sealing seat is very widespread on the market, this technical solution does have some drawbacks.

Among these drawbacks, for example, there is the sealing not being optimal if exclusively left to the thermoplastic material assembled to the metal sealing seat. Indeed, to obtain a good sealing, the thermoplastic material should contact a slab characterized by a surface almost free from superficial roughness. For this reason the metal surface of the slab should be accurately machined, in particular it should be lapped, which involves a significant increase of the production costs.

The need to provide such a mechanical machining and control of tolerances in the step of manufacturing the parts, involves a significant increase of the production costs, thus making the valves provided with sealing members made of thermoplastic material much more costly, and thus exposing to the risk that manufacturing defects affect the good sealing of the valve itself.

Again, when the valve sealing is exclusively left to the presence of an insert made of thermoplastic material, this is subject to wear and deformations due to consequential misalignments between seat and slab, for example, to the valve opening and closing manoeuvres.

Not last, a drawback which afflicts the gate valves of known type provided with a sealing insert made of thermoplastic material consists in that they are not reliable due to high fluid pressure values, high pressures even intended as pressure values exceeding 55 bars. This due to the fact that the sealing achieved by the insert made of thermoplastic material is not optimal, especially as a consequence of the aforesaid wear.

Solutions are known on the market to improve the valve sealing even at higher fluid pressure values, which solutions include the metal seat itself as the main sealing member, possibly comprising a sealing member made of thermoplastic material directly suited to the slab. Examples of materials used are the PTFEs (with various compounds), nylon, PEEK, and similar thermoplastic polymers with high hardness.

Even if this solution is ameliorative in terms of sealing at high pressures, it is not totally satisfactory to counter the aforesaid drawbacks.

Moreover, the high manufacturing costs due to reasons such as hardening filling materials on the surface, both on the seat and on the slab, combined with exasperated machining of the surfaces, both of the seat and of the slab, created the conditions to research for new solutions.

Hence we have shown how the solutions known from the state of the art to manufacture the seat sealing on the slab in gate valves are affected by drawbacks limiting the utilization field thereof.

It is therefore the primary task of the present invention to provide a sealing system for industrial gate valves which solves the above-described problems left unsolved by the systems of known type.

Within the scope of this task, it is the object of the present invention to provide a sealing system capable of ensuring the sealing even for high operating pressures, exceeding 55 bars, up to 150 bars and beyond, while keeping the manufacturing costs low.

It is another object of the present invention to provide a sealing system which is free from the problems deriving from the presence of impurities or dirt in general in the fluid, which in the long term compromise the proper operation of the valve and the sealing of the seat on the sphere.

It is also the object of the present invention to provide a sealing system suited to the high pressures while keeping low costs for manufacturing the system itself and the valve comprising such a system.

Not last, it is the object of the present invention to provide a sealing system which, with respect to the seals at high pressures, ensures a decrease of the torque values necessary to open/close the valve, with the consequential advantage of being able to use less powerful actuators, thus resulting in further operating and manufacturing saving.

This task and these and other objects which will become more apparent upon a detailed description of the present invention given here by way of non-limiting illustration, are achieved by a sealing system according to claim 1.

Further features and advantages of the present invention will become more apparent from the following detailed description, given by way of non-limiting example and illustrated in the accompanying drawings, in which:
figure 1 shows a diagram of the system according to the present invention in a first configuration and according to a first embodiment;
figure 2 shows a diagram of the system according to the present invention according to the configuration in figure 1 in a second embodiment;
figure 3 shows a diagram of the system according to the present invention according to a second embodiment and in a first configuration;
figure 4 shows a diagram of the system according to the present invention according to the configuration in figure 3 in a second embodiment.

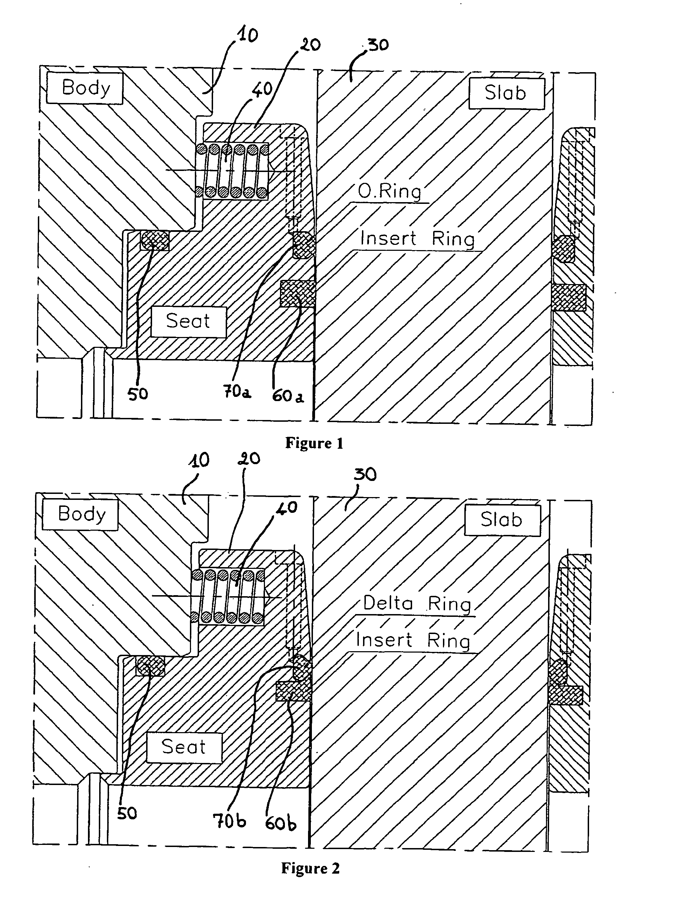

In particular, with reference to figure 1, the sealing system 1 according to the present invention comprises a seat 20 for the sealing on a slab 30 and suited to cooperate with a valve body 10. Seat 20 cooperates with the valve body 10 as known from the state of the art, therefore a helical spring 40 and an o-ring seal 50 may be advantageously provided between said seat 20 and said valve body 10, for example.

The operation of the foregoing safety valves is known. The pressure exerted by the fluid acting on the external part of seat 20 pushes the seat itself against slab 30, while the operation of the sealing system thus provides that spring 40, acting between seat and valve body, ensures the sealing for low pressure values, and as the pressure increases, the fluid itself exerts an action of pressing the seat against the slab, which ensures the valve sealing.

As shown in figure 1, the sealing of the seat on the slab according to the present invention, is performed by a sealing member 60a, preferably annular in shape and made of thermoplastic material, also called thermoplastic insert, positioned on the seat and projecting towards the slab 30, and by a member made of elastomeric material 70a, preferably a rubber o-ring, also positioned in a specific housing obtained on the seat 20 and capable of carrying out the sealing on slab 30.

A second configuration of the present invention is shown in figure 2, where the elastomeric sealing member 70b consists of a delta ring, so called for the particular triangular profile of the cross section which recalls of the delta symbol, as precisely seen in figure 2.

In this second configuration, the sealing member or thermoplastic insert 60b is positioned beside the elastomeric sealing member (delta ring) 70b so that the two members have an edge of their cross section in reciprocal contact, as shown again in figure 2. Thereby, the housing which accommodates the members 60b and 70b may be characterized by a broader port, which particularly facilitates the insertion of the delta ring into its housing. Indeed, inserting the elastomeric member into the seat is not simple, and particular care and the use of specific machinery are required to insert the o-ring into the housing obtained on the seat, especially in the case of the first embodiment where an o-ring having a circular cross section is used as an elastomeric sealing member.

The second configuration shown is thus preferred in terms of constructional simplicity.

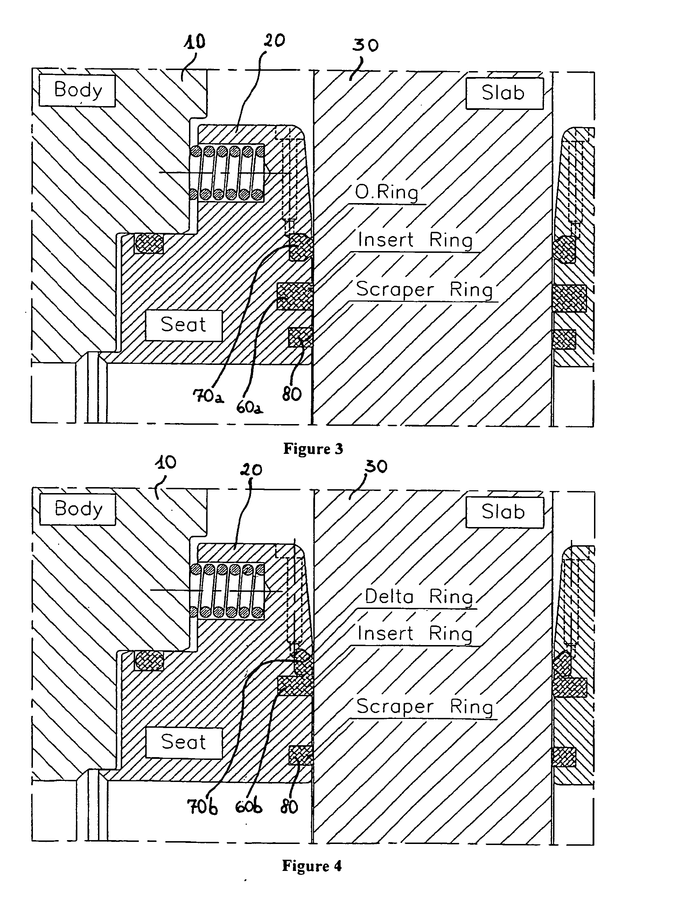

Again, according to a further embodiment of the present invention shown in figure 3, in addition to the sealing member 60a made of thermoplastic material and to the o-ring sealing member 70a made of elastomeric material, the insertion of a further member 80 on the seat may be provided, as long as it always projects towards the slab 30 which is also preferably designed as a ring made of thermoplastic material, called scraper ring and placed to protect and guard the sealing system disclosed heretofore.

In particular, the protection member (scraper ring) is also inserted on the seat 20, placed between seat 20 and slab 30, placed close to the central fluid passage conduit with respect to the sealing members 60a, 60b and 70a, 70b.

Thereby, the scraper ring member 80 simultaneously serves the function of preserving the sealing members 60a and 70a from any impurities present in the fluid and preventing the metal-to-metal contact between seat and sphere in the case of particularly high pressures, hence contributing to reduce the pressure acting between seat and slab, while contributing to the sealing function performed by thermoplastic insert 60a and elastomeric insert 70a.

The same considerations here reported with reference to the embodiment in figure 3 may be repeated with reference to the embodiment in figure 4, where the additional scraper ring member 80 is associated with the sealing member made of thermoplastic material 60b and with the sealing member 70b made of elastomeric material called delta ring due to the substantially triangular profile of its cross section.

It has thus been shown how the sealing system for industrial gate valves according to the present invention achieves the suggested object and purposes.

In particular, it has been disclosed how the system object of the present invention allows to obtain the optimal sealing even against high operating pressures which exceed the standard values obtainable with the valves provided with traditional sealing systems.

It is a further object achieved by the system according to the present invention the improvement of the reliability of the valves provided with said system. Indeed, it has been shown how the risk of damaging the slab or, at worst, the seizing of the valve itself are also avoided in the case of very high operating pressures and presence of dirt in the line.

Again, it is an object achieved by the system according to the present invention the suppression or at least a considerable reduction of the sticking phenomenon, i.e. the gluing of the seat on the slab in the case of long periods of no handling of the valve, and this due to the fact that the system under examination considerably reduces the stress between the seat and the slab under the pressure push , thus preventing the metal contact between these two members.

It is not a last object achieved by the system according to the present invention the capability of using less powerful actuators for handling the slab with respect to the valves of the type known from the state of the art and having the same utilization pressure range.

Again, it is an object achieved by the system according to the present invention the provision of a gate valve which is more cost-effective to be implemented, the operating pressures being the same.

Several modifications may be made by the person skilled in the art without departing from the scope of protection of the present invention.

Therefore, the scope of protection of the claims should not be limited by the disclosures or preferred embodiments shown in the description by way of example, but rather the claims comprise all features of patentable novelty inferable from the present invention.

## Claims

1. A sealing system (1) for industrial valves, in particular for gate valves of the type comprising at least one seat (20) suited to be inserted into the containing body (10) of a gate valve, and one slab (30) suited to close the valve by hermetically contacting said seat (20), and one sealing member (60a, 60b) made of thermoplastic material placed at the surface of said seat (20) intended to face towards said slab (30) and suited to achieve a fluid sealing between said seat (20) and said slab (30) of said valve, also comprising at least a further member (70a, 70b) made of elastomeric material at the surface of said seat (20) intended to face towards said slab (30), **characterized in that** said member (60a, 60b) made of thermoplastic material is ring-shaped and has a polygonal cross section.

2. A sealing system (1) according to claim 1, **characterized in that** said member (70a, 70b) made of elastomeric material is ring-shaped.

3. A sealing system (1) according to any one of the preceding claims, **characterized in that** said sealing member made of elastomeric material consists of an o-ring (70a) having a circular cross section.

4. A sealing system (1) according to any one of the claims from 1 to 2, **characterized in that** said sealing member made of elastomeric material consists of a ring (70b) having a triangular cross section.

5. A sealing system (1) according to one or more of the preceding claims, **characterized in that** said seat (20) comprises at least one housing suited to accommodate said thermoplastic member (60a, 60b) and at least one housing suited to accommodate said elastomeric member (70a, 70b), on the surface thereof facing towards the slab (30).

6. A sealing system (1) according to the preceding claim, **characterized in that** said housing of said thermoplastic member (60a, 60b) and said housing of said elastomeric member (70a, 70b) are joined together to form a single housing.

7. A sealing system (1) according to any one of the claims from 1 to 8, **characterized in that** it further comprises at least one thermoplastic safety member (80) inserted on said seat (20) between the same and the slab (30).

8. A sealing system (1) according to the preceding claim, **characterized in that** said safety member (80) is positioned close to the central fluid passage conduit with respect to the sealing members (60a, 60b; 70a, 70b).

9. A gate valve comprising a sealing system according to one or more of the preceding claims.

## Patentansprüche

1. Dichtungssystem (1) für industrielle Ventile, insbesondere Schieberventile, von dem Typ, der zumindest einen Sitz (20), der geeignet ist, in den Aufnahmekörper (10) eines Schieberventils eingesetzt zu werden, und eine Platte (30), die geeignet ist, das Ventil zu schließen, indem sie hermetisch mit dem Sitz (20) in Kontakt gelangt, und ein Dichtungselement (60a, 60b) umfasst, das aus thermoplastischem Material hergestellt ist, an der Fläche des Sitzes (20) platziert ist, die dafür vorgesehen ist, in Richtung der Platte (30) zu weisen, und geeignet ist, eine Fluidabdichtung zwischen dem Sitz (20) und der Platte (30) des Ventils zu erreichen, und auch zumindest ein weiteres aus elastomerem Material hergestelltes Element (70a, 70b) an der Fläche des Sitzes (20) umfasst, die dafür vorgesehen ist, in Richtung der Platte (30) zu weisen, **dadurch gekennzeichnet, dass** das aus thermoplastischem Material hergestellte Element (60a, 60b) ringförmig ist und einen polygonalen Querschnitt aufweist.

2. Dichtungssystem (1) nach Anspruch 1, **dadurch gekennzeichnet, dass** das aus elastomerem Material hergestellte Element (70a, 70b) ringförmig ist.

3. Dichtungssystem (1) nach einem der vorhergehenden Ansprüche,
**dadurch gekennzeichnet, dass** das aus elastomerem Material hergestellte Dichtungselement aus einem O-Ring (70a) besteht, der einen kreisförmigen Querschnitt aufweist.

4. Dichtungssystem (1) nach einem der Ansprüche 1 bis 2, **dadurch gekennzeichnet, dass** das aus elastomerem Material hergestellte Dichtungselement aus einem Ring (70b) besteht, der einen dreieckigen Querschnitt aufweist.

5. Dichtungssystem (1) nach einem oder mehreren der vorhergehenden Ansprüche, **dadurch gekennzeichnet, dass** der Sitz (20) zumindest ein Gehäuse umfasst, das geeignet ist, das thermoplastische Element (60a, 60b) aufzunehmen, und zumindest ein Gehäuse, das geeignet ist, das elastomere Element (70a, 70b) an seiner in Richtung der Platte (30) weisenden Fläche aufzunehmen.

6. Dichtungssystem (1) nach dem vorhergehenden Anspruch, **dadurch gekennzeichnet, dass** das Gehäuse des thermoplastischen Elements (60a, 60b) und das Gehäuse des elastomeren Elements (70a, 70b) zusammengefügt sind, um ein einziges Gehäuse zu bilden.

7. Dichtungssystem (1) nach einem der Ansprüche 1 bis 8, **dadurch gekennzeichnet, dass** es ferner zumindest ein thermoplastisches Sicherheitselement (80) umfasst, das an dem Sitz (20) zwischen selbigem und der Platte (30) eingesetzt ist.

8. Dichtungssystem (1) nach dem vorhergehenden Anspruch, **dadurch gekennzeichnet, dass** das Sicherheitselement (80) nahe bei der zentralen Fluiddurchgangsleitung mit Bezug auf die Dichtungselemente (60a, 60b; 70a, 70b) positioniert ist.

9. Schieberventil, das ein Dichtungssystem nach einem oder mehreren der vorhergehenden Ansprüche umfasst.

## Revendications

1. Système d'étanchéité (1) pour des robinetteries industrielles, en particulier pour des robinets-vannes du type comprenant au moins un siège (20) approprié pour être inséré dans le corps contenant (10) d'un robinet-vanne, et une plaque (30) appropriée pour fermer le robinet-valve en entrant en contact hermétique avec ledit siège (20), et un élément d'étanchéité (60a, 60b) fait de matériau thermoplastique positionné sur la surface dudit siège (20), prévue pour être orientée vers ladite plaque (30), et approprié pour réaliser une étanchéité contre les fluides entre ledit siège (20) et ladite plaque (30) dudit robinet-valve, comprenant également au moins un élément supplémentaire (70a, 70b) fait de matériau élastomère sur la surface dudit siège (20), prévue pour être orientée vers ladite plaque (30), **caractérisé en ce que** ledit élément (60a, 60b) fait de matériau thermoplastique présente une forme annulaire et une section transversale polygonale.

2. Système d'étanchéité (1) selon la revendication 1, **caractérisé en ce que** ledit élément (70a, 70b) fait de matériau élastomère présente une forme annulaire.

3. Système d'étanchéité (1) selon une quelconque des revendications précédentes, **caractérisé en ce que** ledit élément d'étanchéité fait de matériau élastomère est constitué d'un joint torique (70a) présentant une section transversale circulaire.

4. Système d'étanchéité (1) selon une quelconque des revendications 1 et 2, **caractérisé en ce que** ledit élément d'étanchéité fait de matériau élastomère est constitué d'un anneau (70b) présentant une section transversale triangulaire.

5. Système d'étanchéité (1) selon une ou plusieurs des revendications précédentes, **caractérisé en ce que** ledit siège (20) comprend au moins un logement approprié pour loger ledit élément thermoplastique (60a, 60b) et au moins un logement approprié pour loger ledit élément élastomère (70a, 70b), sur la surface de celui-ci orientée vers la plaque (30).

6. Système d'étanchéité (1) selon la revendication précédente, **caractérisé en ce que** ledit logement dudit élément thermoplastique (60a, 60b) et ledit logement dudit élément élastomère (70a, 70b) sont joints l'un à l'autre pour former un seul logement.

7. Système d'étanchéité (1) selon une quelconque des revendications 1 à 8, **caractérisé en ce qu'**il comprend en outre au moins un élément thermoplastique de sécurité (80) inséré sur ledit siège (20) entre celui-ci et la plaque (30).

8. Système d'étanchéité (1) selon la revendication précédente, **caractérisé en ce que** ledit élément de sécurité (80) est positionné près du conduit de passage de fluide central par rapport aux éléments d'étanchéité (60a, 60b ; 70a, 70b).

9. Robinet-vanne comprenant un système d'étanchéité selon une ou plusieurs des revendications précédentes.
